# EUROPEAN PATENT APPLICATION

(11) **EP 4 492 113 A1**
(43) Date of publication of application: **15.01.2025**
(21) Application number: 22931021.4
(22) Date of filing: 25.11.2022
(51) Int. Cl.: G02B 7/04, H02K 41/03

(54) **LENS DRIVE UNIT AND LENS BARREL EQUIPPED WITH SAME**

(30) Priority: 07.03.2022 JP 2022034289
(71) Applicant: Panasonic Intellectual Property Management Co., Ltd., Kadoma-shi, Osaka 571-0057 (JP)
(72) Inventor: FUJINAKA, Hiroyasu, Kadoma-shi, Osaka 571-0057 (JP)
(74) Representative: Eisenführ Speiser
(86) International application number: PCT/JP2022/043574
(87) International publication number: WO 2023/171049

(57) **Abstract**

A lens drive unit (10) comprises two-phase coils (212) and field units (205). The two-phase coils (212) are fixed to a focusing lens frame (210) that is able to move back and forth in the optical axis direction and holds a lens, and are disposed side by side along the optical axis direction. The field units (205) have N poles and S poles that are disposed alternately along the optical axis direction. The coils (212) are disposed in two or more sets side by side in the optical axis direction, with one set of two-phase coils (212) for a field unit (205).

## Description

### TECHNICAL FIELD

The present invention relates, for example, to a lens drive unit that drives a lens back and forth in the optical axis direction, and to a lens barrel equipped with this lens drive unit.

### BACKGROUND ART

Conventionally, a linear motor capable of high-speed response has been used to move a lens frame of a lens barrel in the optical axis direction.

In recent years, imaging elements used in imaging devices have grown in size in order to achieve higher pixel counts, improve the dynamic range, and so forth.

As imaging elements become larger, the lenses used in the lens barrel also necessarily become larger, and the mass of the lenses is also greater. Consequently, the actuator that drives a larger lens needs to have a higher thrust force than in the past.

In view of this, the applicant has proposed a linear motor capable of generating a higher thrust force (Patent Literature 1).

Patent Literature 1 discloses a linear motor with which the thrust density of the linear motor is increased by making the field portion of the linear motor multipolar and performing two-phase drive, and furthermore the problem of magnetic saturation is resolved, which makes it easier to lengthen the stroke.

Also disclosed is a configuration in which magnets are disposed along the optical axis direction at positions opposite both sides of the coils so as to sandwich the coils, which further increases thrust.

### CITATION LIST

### PATENT LITERATURE

Patent Literature 1: JP-A 2019-213433

### SUMMARY

### (TECHNICAL PROBLEM)

However, the following problem is encountered with the above-mentioned conventional configuration.

With the linear motor disclosed in Patent Literature 1, a lens that is heavier than in the past could be driven, but there was a limit to how much the thrust could be increased with the above configuration alone, and further improvements were necessary to enable driving heavier lenses.

### (SOLUTION TO PROBLEM)

The present invention provides a lens drive unit with which thrust can be increased over that in the past in order to smoothly drive a heavier lens, as well as a lens barrel equipped with this lens drive unit.

The lens drive unit according to the present invention comprises n-phase coils and a first field portion. The n-phase coils are fixed to a first moving frame that is able to move back and forth in the optical axis direction and holds a lens, and are disposed side by side along the optical axis direction. The first field portion has N poles and S poles disposed alternately along the optical axis direction. The coils are disposed in two or more sets side by side in the optical axis direction, with each set being n-phase coils with respect to one of the first field portions (n is an integer of 2 or more).

### (EFFECTS)

With the lens drive unit of the present invention, it is possible to achieve higher thrust than in the past, and to drive a lens with a larger mass back and forth in the optical axis direction.

### BRIEF DESCRIPTION OF THE DRAWINGS

Fig. 1 is an overall oblique view of a lens barrel equipped with the lens drive unit of the present invention;
Fig. 2 is an exploded oblique view of the lens barrel in Fig. 1;
Fig. 3 is an exploded oblique view of a second lens group unit included in the lens barrel of Fig. 2;
Fig. 4A is a front view of the magnetic circuit configuration of the lens drive unit in Embodiment 1, as viewed in the optical axis direction;
Fig. 4B is a plan view of the magnetic circuit configuration of the lens drive unit in Embodiment 1;
Fig. 4C is a side view of the magnetic circuit configuration of the lens drive unit in Embodiment 1;
Fig. 5 is a detail view of the X portion in Fig. 4C;
Fig. 6A is a front view of the magnetic circuit configuration of a voice coil motor in Comparative Example 1, as viewed in the optical axis direction;
Fig. 6B is a plan view of the magnetic circuit configuration of the voice coil motor in Comparative Example 1;
Fig. 6C is a side view of the magnetic circuit configuration of the voice coil motor in Comparative Example 1;
Fig. 7A is a front view of the magnetic circuit configuration of the lens drive unit in Comparative Example 2 (Prior Art Document 1) as viewed in the optical axis direction;
Fig. 7B is a plan view of the magnetic circuit configuration of the lens drive unit in Comparative Example 2 (Prior Document 1);
Fig. 7C is a side view of the magnetic circuit configuration of the lens drive unit in Comparative Example 2 (Prior Document 1);
Fig. 8 is a diagram comparing the characteristics of lens drive units;
Fig. 9 is a diagram comparing the characteristics of lens drive units;
Fig. 10 is a diagram showing the dynamic balance of the second lens group unit of Fig. 3, as viewed in the optical axis direction;
Fig. 11 is an oblique view of the configuration of the lens drive unit according to Embodiment 2;
Fig. 12 is an exploded oblique view of the lens drive unit in Fig. 11;
Fig. 13 is a cross-sectional view of the lens drive unit in Fig. 11; and
Fig. 14 is an oblique view of a conventional voice coil motor in which a plurality of coils are used.

### DESCRIPTION OF THE EMBODIMENTS

Embodiments will now be described in detail through reference to the drawings as needed. However, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art. Also, expressions indicating relative direction or orientation, such as parallel, vertical, and perpendicular, are used in the following description of the embodiments, but these expressions may not always mean the direction or orientation in a strict sense. For instance, "parallel" does not only mean perfectly parallel, and also encompasses the meaning of substantially parallel, that is, a difference of, say, a few percent.

The inventors have provided the appended drawings and the following description so that a person skilled in the art might fully understand this disclosure, but do not intend for these to limit what is discussed in the patent claims.

### Embodiment 1

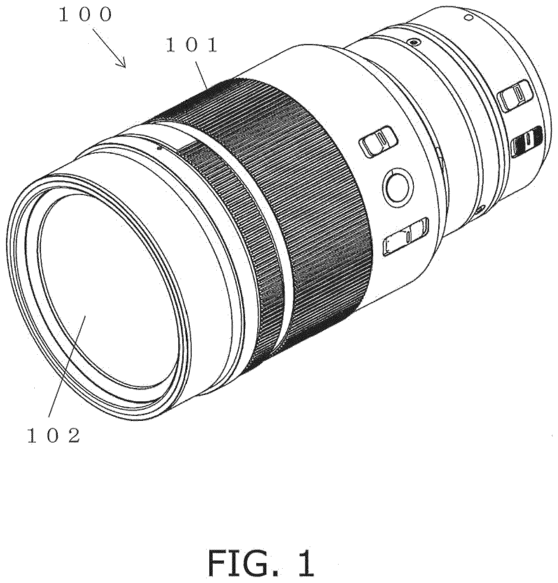

The lens drive unit according to an embodiment of the present invention, and a lens barrel 100 equipped with this lens drive unit, will now be described with reference to Figs. 1 to 9.

### (1) Overview of Configuration of Lens Barrel 100

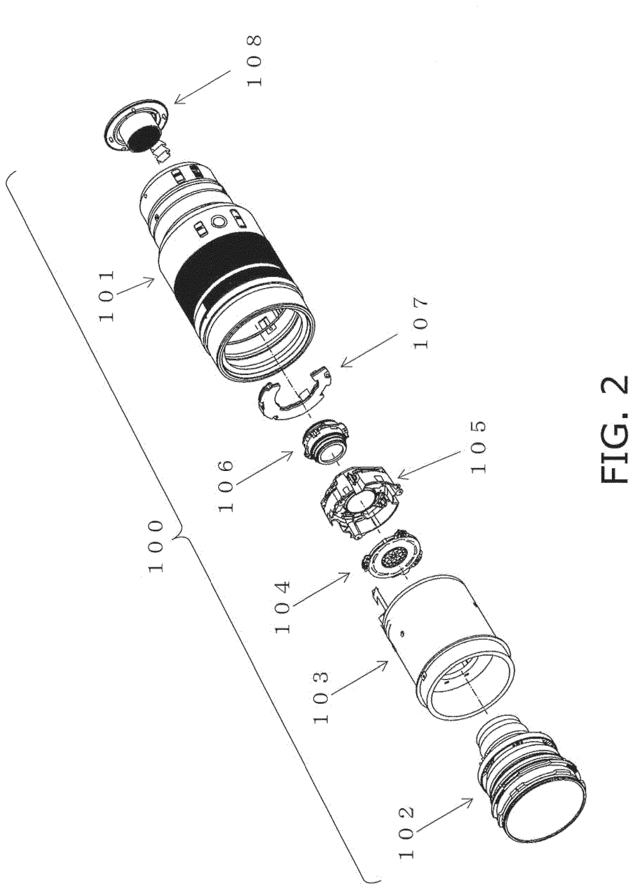

The configuration of a lens barrel 100 according to this embodiment will now be described with reference to the drawings. Fig. 1 is an oblique view showing the overall configuration of the lens barrel 100 according to this embodiment. Fig. 2 is an exploded oblique view of the lens barrel 100 according to this embodiment.

As shown in Fig. 1, the lens barrel 100 is a lens barrel for an interchangeable lens camera, and is removably attached to a camera body (not shown). As shown in Fig. 2, the lens barrel 100 comprises an exterior unit 101, a first lens group unit 102, a second lens group unit 103, an aperture unit 104, a third lens group unit 105, a fourth lens group unit 106, a circuit board unit 107, and a lens mount unit 108.

The lens barrel 100 is attached to the camera body via the lens mount unit 108 in a state in which the lens mount unit 108 has been attached to the exterior unit 101.

The exterior unit 101 is a substantially cylindrical member that forms the outer shell of the lens barrel 100, and is disposed on the outermost side.

The first lens group unit 102 is a substantially cylindrical member that encompasses a first lens and is disposed on the inner peripheral surface side of the exterior unit 101.

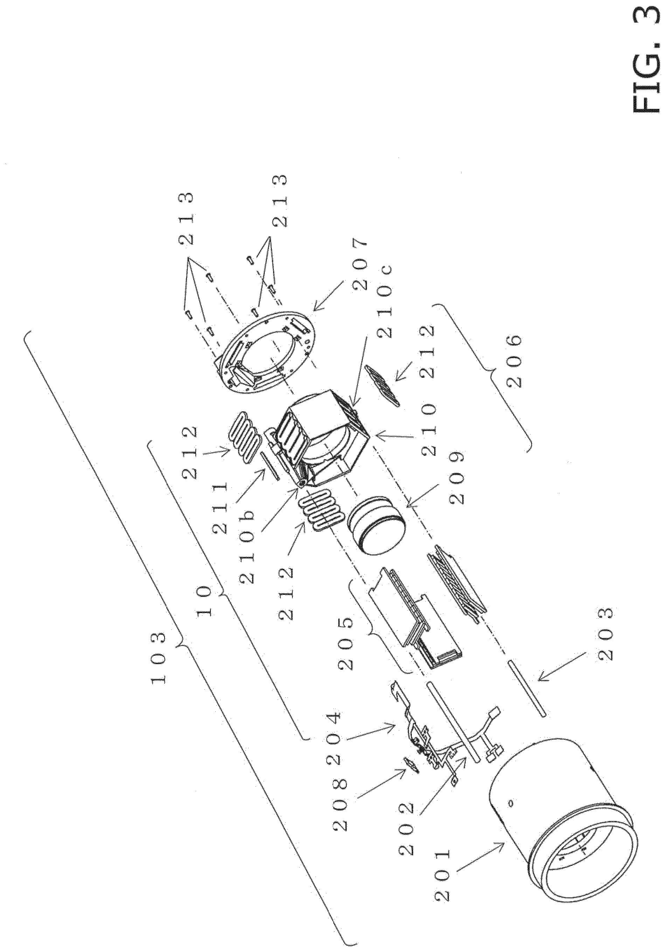

The second lens group unit 103 is a substantially cylindrical member that holds a focusing lens, and comprises a lens drive unit 10 (see Fig. 3) for driving a focusing lens 209 (discussed below) back and forth in the optical axis direction. The second lens group unit 103 is disposed on the inner peripheral surface side of the exterior unit 101.

The aperture unit 104 is a substantially annular member that is provided between the second lens group unit 103 and the third lens group unit 105 in order to adjust the amount of light passing through the lens portion of lens barrel 100 by driving movable blades to vary the surface area of the open portion.

The third lens group unit 105 is a substantially cylindrical member that holds an image stabilization lens and drives the image stabilization lens in a plane perpendicular to the optical axis. The third lens group unit 105 is disposed on the inner peripheral surface side of the exterior unit 101.

The fourth lens group unit 106 is a substantially cylindrical member that holds a fixed lens, and is disposed on the inner peripheral surface side of the exterior unit 101.

The circuit board unit 107 is used for driving the lens barrel 100, and includes a printed board on which electrical components, electrical contacts, etc., are mounted. The circuit board unit 107 is housed in the space between the image plane side of the third lens group unit 105, the outer periphery of the fourth lens group unit 106, and the inner periphery of the exterior unit 101.

The lens mount unit 108 is a connecting member for connecting and fixing the lens barrel 100 to a camera body (not shown), and is fixed to the end surface of the exterior unit 101 on the image plane side.

### (2) Second Lens Group Unit

Next, the configuration of the second lens group unit 103 will be described in detail.

### (2-1) Overall structure

First, the overall configuration of the second lens group unit 103 according to this embodiment will be described.

Fig. 3 is an exploded oblique view of the second lens group unit 103. As shown in Fig. 3, the second lens group unit 103 comprises, from the subject side to the image plane side, a fixed frame 201, a main shaft 202, a sub-shaft 203, a flexible printed circuit board 204, field units 205, a focusing lens unit 206, and a holding frame 207.

The fixed frame 201 is a substantially annular member disposed on the side of the second lens group unit 103 nearest the subject, and holds the main shaft 202, the sub-shaft 203, and the subject side end of the field units (first field portion, second field portion) 205.

An MR (magneto-resistive) sensor 208 is connected to the flexible printed circuit board 204, and is fixed in a state of being wound around the outer peripheral part of the fixed frame 201.

The focusing lens unit 206 comprises a focusing lens 209, a focusing lens frame (first moving frame) 210, an MR (magneto-resistive) magnet 211, and coils 212.

The focusing lens 209 is fixed to the inner peripheral part of the focusing lens frame 210.

The MR magnet 211 is fixed to the outer peripheral part of the focusing lens frame 210.

A total of four coils 212 are fixed to the outer peripheral part of the focusing lens frame 210 in two sets, each set consisting of two phases (two) disposed side by side in the optical axis direction for one field unit 205. The two sets of four coils 212 are disposed at three places around the outer peripheral surface of the focusing lens frame 210 at approximately equal angular intervals in the circumferential direction. Consequently, in this embodiment, a total of twelve coils 212 (two sets of two phases provided at three places) are fixed around the outer peripheral part of the focusing lens frame 210.

The term "two-phase coil 212" means a configuration in which two coils, each with an electric wire wound around it, are disposed opposite each other in the optical axis direction, centered on a winding axis disposed along a direction perpendicular to the optical axis of the focusing lens 209, with respect to the field units 205.

The main shaft 202 and the sub-shaft 203 are inserted into insertion holes 210b and 210c of the focusing lens unit 206, respectively, and are disposed along the direction of the optical axis L. The main shaft 202 and the sub-shaft 203 guide the movement of the focusing lens unit 206 in the direction of the optical axis L. The main shaft 202, the sub-shaft 203, and the field units 205 have their ends on the image plane side fixed to the holding frame 207.

The holding frame 207 is fixed to the fixed frame 201 with a plurality of screws 213.

Consequently, the focusing lens unit 206 is driven in the direction of the optical axis L along the main shaft 202 while its rotation around the main shaft 202 is restricted by the sub-shaft 203.

The MR magnet 211 is an example of a position sensing member that senses the position of the focusing lens unit 206.

The MR sensor 208 is an example of the position sensor.

The MR magnet 211 is provided to the focusing lens unit 206 so as to be disposed in the vicinity of the MR sensor 208 in an assembled state. Accordingly, when the focusing lens unit 206 including the MR magnet 211 moves back and forth in the direction of the optical axis L, the MR sensor 208 detects a change in the magnetic field caused by a change in the relative position of the MR magnet 211 with respect to the MR sensor 208.

Consequently, the position of the focusing lens unit 206 with respect to the fixed frame 201 can be sensed by sensing the output of the MR sensor 208.

In this embodiment, an MR sensor is used as an example of a position sensor, but some other position detection sensor such as a photocoupler may be used instead.

Also, in this embodiment, an MR magnet is used as an example of a position sensing member, but some other position detection member such as a reflecting mirror may be used instead.

The coils 212 are components constituting the lens drive unit 10 (discussed below), are fixed to the focusing lens frame 210, and are held in a state of being inserted into a gap in the field units 205 during imaging.

### (2-2) Configuration of Lens Drive Unit 10

The configuration of the lens drive unit 10 including the field units 205 and the coils 212 will now be described in detail.

The lens drive unit 10 is a device that drives the focusing lens unit 206 back and forth in the direction of the optical axis L.

For the purposes of description, only one field unit 205 and its corresponding coil 212 will be described below, out of the three field units 205 provided in the configuration shown in Fig. 3, and their corresponding coils 212.

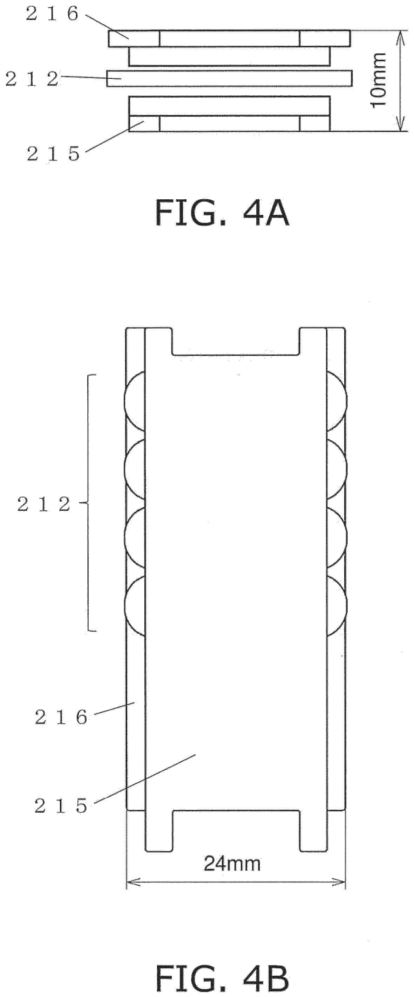

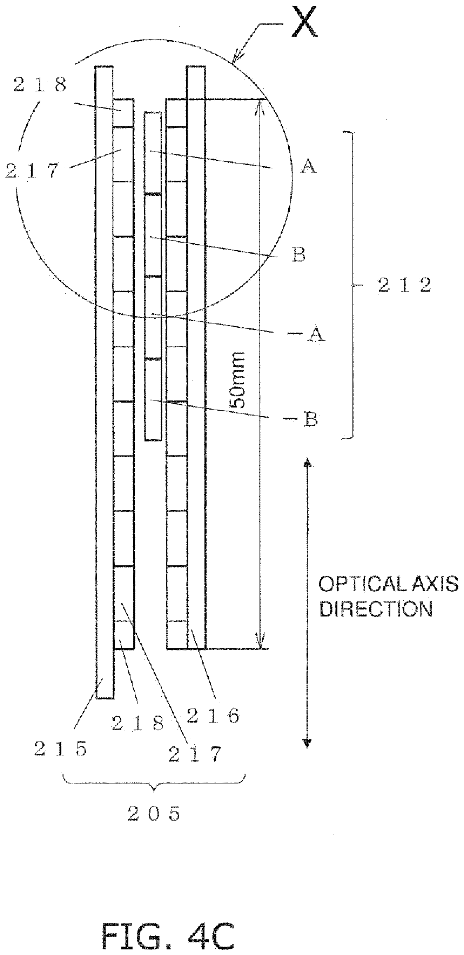

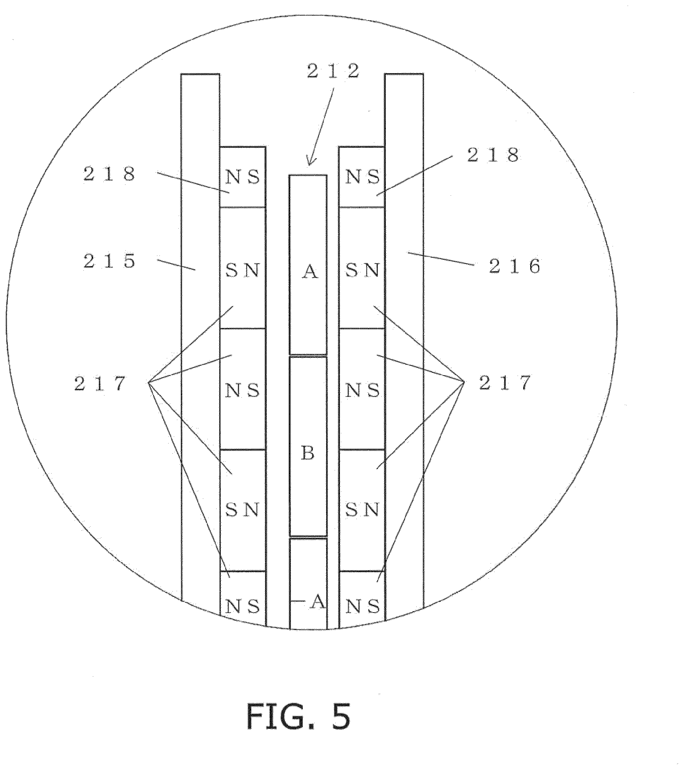

Figs. 4A to 4C constitute a three-plane view showing the configuration of the lens drive unit 10 according to this embodiment, and Fig. 5 is a detail view of the X portion in Fig. 4C.

A yoke A215 and a yoke B216 are made by punching out a piece of iron sheet metal with a press. As shown in Figs. 4A to 4C, the yoke A215 and the yoke B216 are flat members.

Main magnets 217 and sub-magnets 218 are neodymium-based sintered magnets, for example, and each is magnetized with a single pole. The sub-magnets 218 have a width in the optical axis direction that is half that of the main magnets.

As shown in Figs. 4A to 5, the field units 205 are configured such that sub-magnets 218 at both ends in the optical axis direction and nine main magnets 217 provided in between these are fixed with respect to the yoke A215 and the yoke B216 so that the magnetization of the surfaces facing the coils 212 is regularly arranged in an alternating N pole and S pole pattern.

The coils 212 are arranged in the order of A phase, B phase, -A phase, and -B phase, in that order starting from the top in Fig. 4C. The A phase and -A phase coils are connected in series, and the B phase and -B phase coils are also connected in series.

A configuration in which two phases of coil, namely, the A phase and the B phase (or the -A phase and the -B phase) form a set with respect to one field unit 205, and two or more sets are arranged along the optical axis direction will hereinafter be referred to as a tandem configuration.

Here, when current with a phase shift of 90° is passed through the coils A phase and -A phase, and the coils B phase and -B phase, according to the phase relationship between the coils 212 and the field units 205, the coils 212 are subjected to Lorentz force and driven in the optical axis direction.

More precisely, since the field units 205 are fixed on the fixed frame 201 side, and the coils 212 are fixed on the focusing lens unit 206 side, when current is passed through the coils 212, the focusing lens unit 206 is driven in the optical axis direction relative to the fixed frame 201.

### (2-3) Comparison of Characteristics of Lens Drive Unit 10 with Comparative Examples 1 and 2

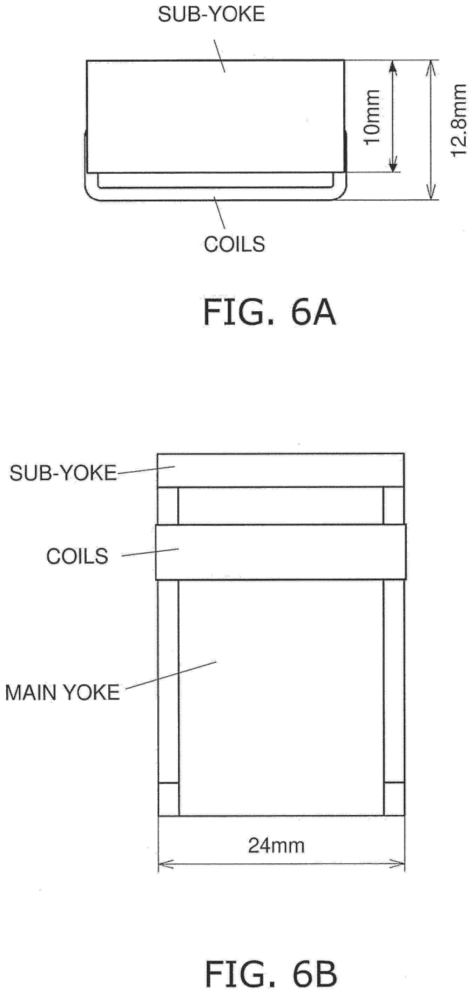

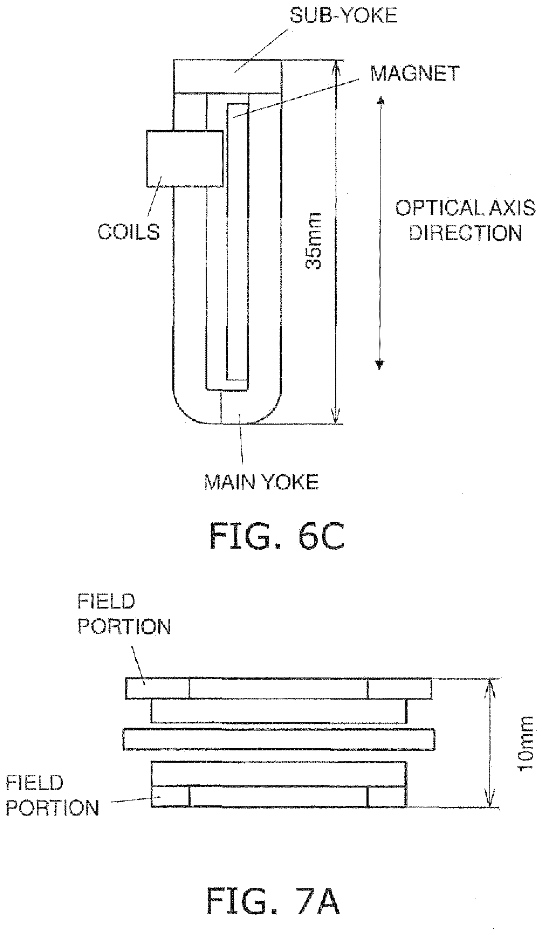

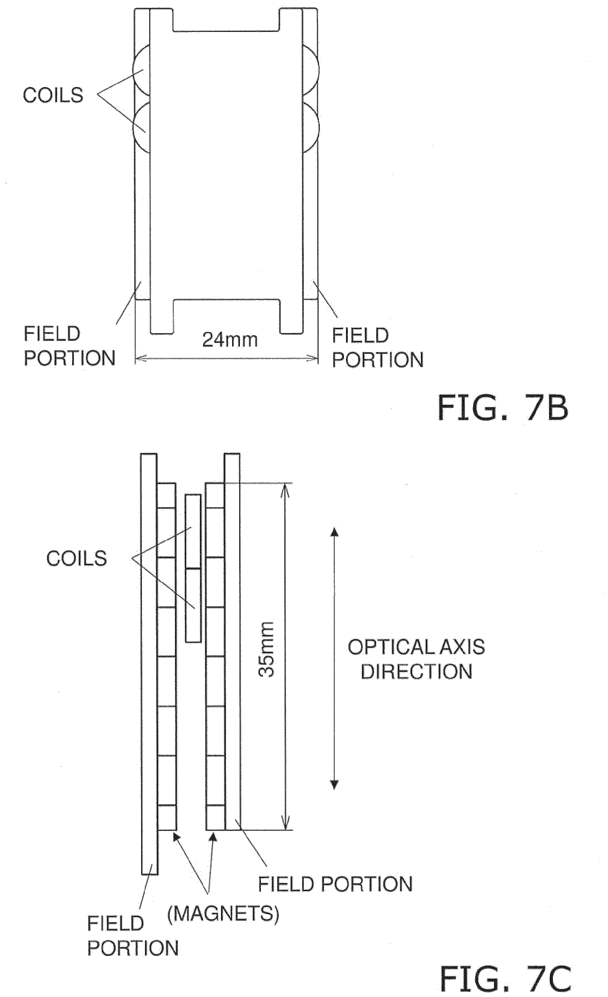

Here, in order to illustrate the characteristics of lens drive unit 10 in this embodiment shown in Figs. 4A to 4C, the characteristics will be described by comparison between a conventional voice coil motor (Comparative Example 1) shown in Figs. 6A to 6C, and a lens drive unit of a basic configuration featuring only two coils as disclosed in Patent Literature 1 shown in Figs. 7A to 7C (Comparative Example 2).

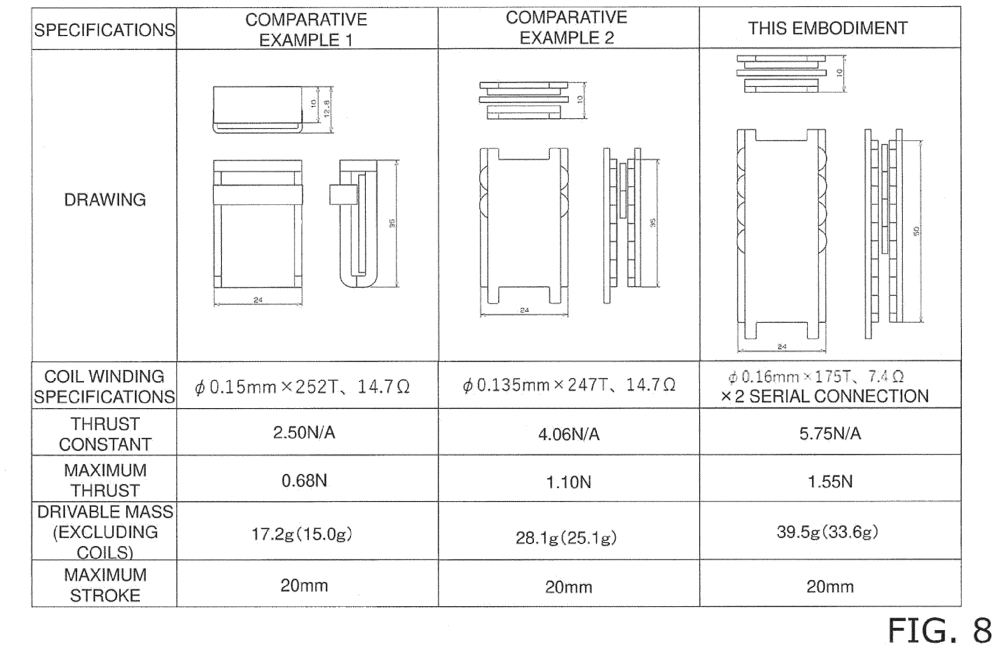

Fig. 8 is a table showing a comparison of the characteristics of the lens drive unit 10 with those of Comparative Examples 1 and 2.

In Fig. 8, the voice coil motor of Comparison Example 1 shown in Figs. 6A to 6C and the lens drive unit of Comparison Example 2 shown in Figs. 7A to 7C are cases in which the design is intended to increase thrust as high as possible within the combined range of the size of the field portions excluding the protrusions and the coil resistance value.

Here, the characteristics of the voice coil motor in Comparative Example 1 shown in FIGS. 6A to 6C will be compared with those of the lens drive unit of the basic configuration in Comparative Example 2 shown in Figs. 7A to 7C.

First of all, a comparison of size reveals that, as shown in Fig. 8, the voice coil motor of Comparative Example 1 shown in FIGS. 6A to 6C and the lens drive unit of the basic configuration of Comparative Example 2 shown in Figs. 7A to 7C have field portions of roughly the same size (10 mm thick, 24 mm wide, 35 mm long).

The term "field portion" refers to a portion that includes a main yoke, a sub-yoke, and a magnet, and that generates a fixed magnetic field (for generating a Lorentz force in a coil).

On the other hand, the voice coil motor of Comparative Example 1 has coils protruding downward in the drawing from the field portions as shown in Fig. 6A, and is therefore substantially larger than the lens drive unit of Comparative Example 2 having a basic configuration.

Also, as for thrust, as shown in Fig. 8, the maximum thrust of the voice coil motor of Comparative Example 1 is 0.68 N, whereas the maximum thrust of the lens drive unit of the basic configuration of Comparative Example 2 is 1.10 N, which is some 62% greater.

This indicates that the lens drive unit of the basic configuration of Comparative Example 2 has a far higher thrust than the voice coil motor of Comparative Example 1. Also, since the coils protrude in the voice coil motor of Comparative Example 1, it is clear that this difference will become even more pronounced if the lens drive unit of the basic configuration of Comparative Example 2 is made larger.

Next, the characteristics of the lens drive unit having the basic configuration of Comparative Example 2 shown in Figs. 7A to 7C will be compared with those of the lens drive unit 10 of this embodiment shown in Figs. 4A to 4C.

First of all, as shown in Fig. 8, a comparison of size reveals the lens drive unit 10 of this embodiment shown in Figs. 4A to 4C to have a length in the optical axis direction (50 mm) that is 15 mm longer in the optical axis direction, equivalent to three main magnets (two coils), compared to the lens drive unit of the basic configuration of Comparison Example 2 (35 mm).

Also, as for thrust, as shown in Fig. 8, the lens drive unit of the basic configuration has a thrust of 1.10 N, whereas the lens drive unit 10 of this embodiment has a thrust of 1.55 N, which is about 41% greater.

This shows that in the lens drive unit 10 of this embodiment shown in Figs. 4A to 4C, using a tandem configuration in which two or more sets of two-phase coils are arranged in series for one field unit 205 allows the thrust to be increased while maintaining all other dimensions exactly the same, although the length is slightly greater in the optical axis direction.

### (2-4) Comparison of Characteristics with Configuration in which Multiple Lens Drive Units 10 are Provided

The characteristics of a configuration in which the lens drive unit 10 was used by itself were described above, but now the characteristics when a plurality of lens drive units 10 are used will be described.

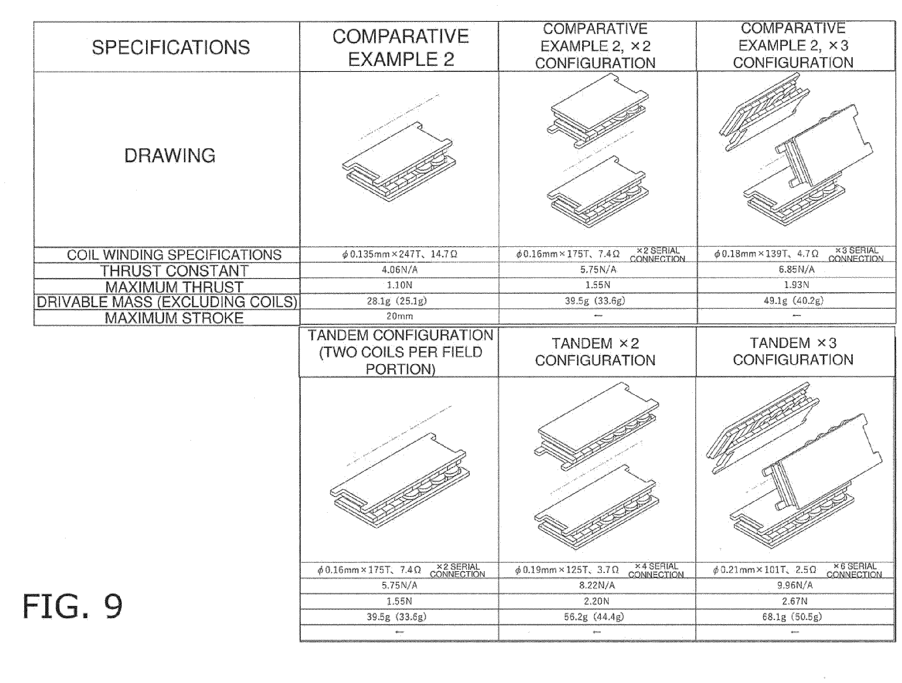

Fig. 9 is a table showing a comparison of characteristics when a plurality of lens drive units are used.

Here, the characteristics when two lens drive units of the basic configuration of Comparative Example 2 are used (the "×2 configuration" in Fig. 9) will be described in simple terms.

Usually, when two lens drive units are used, at first blush one would expect thrust to double, but when two of the same lens drive units are used in parallel, the power consumption also ends up doubling.

In the case of a lens barrel for an interchangeable lens camera, the power used inside the lens barrel is supplied from the camera body side, but there is a limit to how much power can be supplied from the camera body to the lens barrel, and there is also a limit to how much power can be used by the lens drive unit.

Accordingly, with a lens barrel containing two lens drive units, the power that can be supplied to each lens drive unit is halved, and the thrust is not doubled. Therefore, when comparing characteristics, the comparison should be made under conditions that include the total power consumption.

Fig. 9 shows the results of comparing characteristics when the coil winding specifications are adjusted so that the power consumed by the lens drive unit is constant.

In the case of a configuration using two of the basic configurations of Comparative Example 2 (×2 configuration) (see the top in Fig. 9), the maximum thrust is 1.55 N, which is about 41% higher than the maximum thrust of 1.10 N of the basic configuration of Comparative Example 2 (see the top in Fig. 9).

Consequently, it can be seen that the characteristics are equivalent to those of the single lens drive unit 10 in the tandem configuration of this embodiment shown in Figs. 4A to 4C described in section 2-3 above.

Here, a comparison of a configuration using two (×2) of the basic configurations of Comparative Example 2 with the tandem configuration of the lens drive unit 10 of this embodiment reveals that although the tandem configuration of this embodiment is 15 mm longer in the optical axis direction than in Comparative Example 2, the projected surface area in the optical axis direction and the overall volume are much smaller.

In particular, the amount of permanent magnets used in the tandem configuration of this embodiment is much smaller, at 71% of the amount used in the two basic configurations (×2 configuration) of Comparative Example 2. Neodymium, dysprosium, or another such rare earth metal is used for a Nd-based sintered magnet. Accordingly, the price per unit of weight tends to be extremely high, but costs can be reduced even for a lens drive unit with the same output by reducing the amount of magnets used.

The configuration of this embodiment also affords a weight reduction since the yokes and permanent magnets, which have a high specific gravity, are used in smaller amounts.

Furthermore, in Fig. 9, a comparison of the basic configuration, which is a comparative example, with a configuration including three lens drive units 10 of this embodiment (tandem ×3) reveals that the maximum thrust with the basic configuration is 1.10 N, whereas the configuration including three lens drive units 10 of this embodiment (tandem ×3) can generate a thrust of 2.67 N, which is about 2.4 times as much.

This thrust may reach as high as about 3.9 times the thrust of 0.68 N of the since voice coil motor of Comparative Example 1 shown in Figs. 6A to 6C and Fig. 8.

By thus providing a plurality of lens drive units (that is, using a plurality of field units) and combining them with a tandem configuration in which two or more sets of two-phase coils are arranged in series for one field unit, as in the lens drive unit 10 of this embodiment, thrust can be improved over that with a conventional configuration. Consequently, it is possible to drive a heavy lens, which was difficult to drive with a conventional configuration, back and forth in the optical axis direction.

The specific gravity of the glass material used in lenses is generally about 3 to 5. This means that a heavy lens is usually not a single lens with a large weight, but rather a one that makes use of a plurality of lenses, such as the focusing lens 209 shown in Fig. 3.

Therefore, a heavy lens will almost always be rather long in the optical axis direction. Therefore, when driving a heavy lens, it is more or less acceptable for the drive unit to be somewhat longer in the optical axis direction.

As described above, within the range allowable for the lens drive unit 10, when the lens drive units 10 has a tandem configuration and a plurality of lens drive units 10 are combined, it is possible to provide a lens drive unit 10 with which the space both in the optical axis direction and in the peripheral direction around the optical axis can be effectively utilized within the limited size of the lens barrel, and heavier lenses can be driven.

In Fig. 9, a configuration is illustrated in which four coils (two sets of two-phase coils) are used for one field unit as a tandem configuration, but the configuration may also be one in which six or more coils (three sets of two-phase coils) are used.

Also, in the above embodiment, a case was described in which two-phase coils 212 were used to drive the focusing lens unit 206 back and forth in the optical axis direction, but coils of three or more phases may also be used so long as the configuration involves driving with n-phase coils (n is an integer of 2 or more).

For example, in the case of three-phase drive, sets of three coils are arranged in the optical axis direction, with one set per field unit.

However, for three-phase drive, it is necessary to use three coils per set, arranged in the optical axis direction, and the length of each set of coils in the optical axis direction tends to be greater than with two-phase drive.

Also, when a plurality of sets of coils are arranged, there is the risk that there will be fewer options for how many sets of coils to arrange due to restrictions on the length in the optical axis direction.

Consequently, it can be said that two-phase drive, in which two coils are arranged in the optical axis direction for one field unit, offers greater design latitude.

### (2-5) Relevant Points When Using a Configuration with Multiple Lens Drive Units 10

It was shown above that a heavier lens can be driven by increasing the thrust by combining a plurality of lens drive units 10 having a tandem configuration. However, when the lens unit (movable part) including the lens becomes heavier, vibration of the movable part, and particularly vibration produced by looseness caused by the clearance between the outer peripheral surface of the main shaft 202 and the inner peripheral surface of the insertion hole 210b of the focusing lens frame 210, is more likely to occur, so something needs to be done to suppress this vibration.

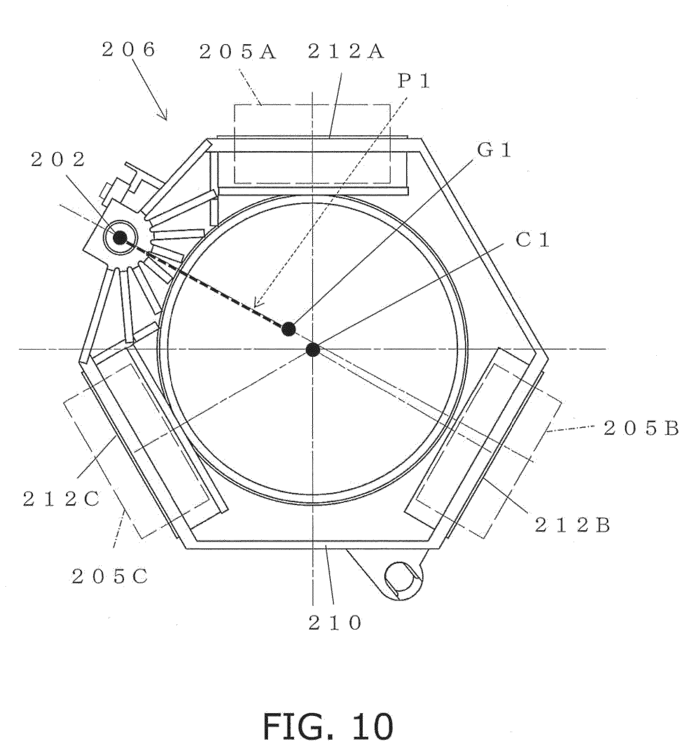

A method for suppressing vibration that tends to occur when a plurality of lens drive units 10 are used in combination will now be described with reference to Fig. 10.

Fig. 10 is a diagram of the focusing lens unit 206 in Embodiment 1 as viewed from the subject side in the optical axis direction.

In Fig. 10, when the focusing lens unit 206 moves at a constant speed, or when it moves back and forth at a low frequency and small amplitude, the forces applied to the focusing lens unit 206 are mainly the thrust generated by the coils 212a, 212b, and 212c and the frictional force generated between the main shaft 202 and the focusing lens frame 210.

In Fig. 10, the coils 212a, 212b, and 212c are disposed at three equally spaced positions centered on the optical axis center C1 of the lens, so the center of the thrust generated by the coils 212a, 212b, and 212c coincides with the optical axis center C1. Also, the frictional force generated between the main shaft 202 and the focusing lens frame 210 is in the opposite direction from that of the thrust produced by the coils 212a, 212b, and 212c.

Therefore, when the focusing lens unit 206 moves at a constant speed, or when it moves back and forth at a low frequency and small amplitude, the focusing lens frame 210 rattles in a mode in which the center of thrust produced by the coils 212a, 212b, and 212c vibrates back and forth in the optical axis direction, centered on the main shaft 202.

Meanwhile, in Fig. 10, when the focusing lens unit 206 moves back and forth at a high frequency and large amplitude, inertial force that attempts to keep the focusing lens unit 206 in the same position becomes dominant. Therefore, the focusing lens unit 206 rattles in a mode in which the thrust center of the coils 212a, 212b, and 212c vibrates back and forth, with the fulcrum being near the center of gravity G1 of the movable part.

The movable part center of gravity G1 refers to the position that is the center of gravity of all the members constituting the movable part, which is able to move relative to the fixed frame 201, such as the focusing lens unit 206 including the focusing lens frame 210 to which the focusing lens 209 is fixed.

In a case that is intermediate between the above cases (motion back and forth at medium frequency and medium amplitude), the rattle vibration occurs with the fulcrum being the movable part center of gravity G1 and some point between the movable part center of gravity G1 and the main shaft 202 in a plane passing through the main shaft 202.

Here, rattle vibration is reduced by bringing the thrust center of the coils 212a, 212b, and 212c closer to the fulcrum of vibration, thereby reducing the moment force applied to the focusing lens unit 206.

The thrust of the coils 212a, 212b, and 212c is greatest when the motion back and forth is at a high frequency and large amplitude. Therefore, if the center of gravity G1 of the movable part is made to coincide substantially with the center of thrust of the coils 212a, 212b, and 212c, vibration can be suppressed even when "the motion back and forth is at a high frequency and large amplitude," in which rattle vibration is more likely to be larger.

Therefore, if we take into account cases in which the drive is performed under various conditions, rattle vibration can be suppressed by making the center of gravity G1 of the movable part coincide substantially with the center of thrust of the coils 212a, 212b, and 212c.

However, with the lens barrel 100 of Embodiment 1, as discussed above, the outer periphery is substantially cylindrical, the inner periphery has focusing lens 209 at its center, and a plurality of parts are disposed in the peripheral direction, such as the main shaft 202, the sub-shaft 203, the MR sensor 208, and the MR magnets 211. Consequently, there are a limited number of places where the field units 205a, 205b, and 205c and the coils 212a, 212b, and 212c can be disposed.

In Embodiment 1, as shown in Fig. 10, the three field units 205a, 205b, and 205c are disposed at approximately equal angular intervals in the peripheral direction around the optical axis center C1 of the focusing lens 209, and the other components are disposed in between these.

When there are such restrictions on the layout of the field units 205a, 205b, and 205c, the field units 205a and 205c are disposed on both sides of the plane P1 that passes through the center of gravity G1 of the movable part and the main shaft 202. That is, as shown in Fig. 10, the field unit 205a and the field unit 205c are disposed on both sides of the plane P1 that passes through the center of gravity G1 of the movable part and the main shaft 202.

This allows the thrust center of the coils 212a, 212b, and 212c to be brought closer to the plane P1 passing through the main shaft 202 and the center of gravity G1 of the movable portion, which serves as the fulcrum of the rattle vibration.

Therefore, the thrust center of the coils 212a, 212b, and 212c can be brought closer to the fulcrum of the rattle vibration, so the rattle vibration can be effectively suppressed.

Also, with the lens drive unit 10 of this embodiment, as discussed above, n-phase (two-phase) coils are disposed for one field unit 205 so as to be sandwiched between the field units 205 from both sides in the radial direction.

This avoids the problem of too much force being applied to the focusing lens frame 210 in a direction intersecting the optical axis direction, and suppresses the occurrence of image blur when an image is captured by a camera to which the lens barrel 100 is mounted.

### Embodiment 2

In Embodiment 1 above, an example was given in which the technique of the present invention was applied to driving a heavy lens, but the technique of the present invention is effective not only for driving a heavy lens, but also when used for other purposes.

In Embodiment 2 below, an example is given in which the technique of the present invention is applied to driving a plurality of lens frames.

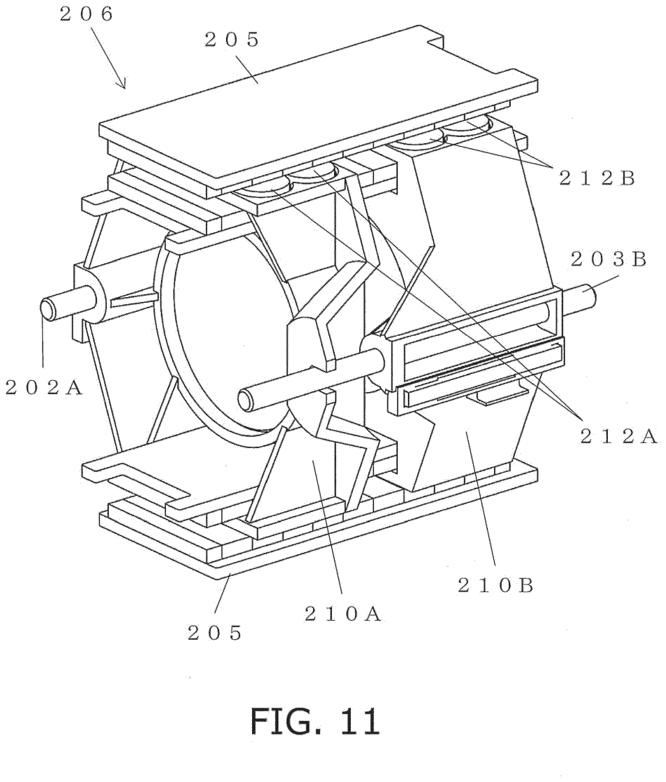

Fig. 11 is an oblique view of the lens drive unit according to Embodiment 2.

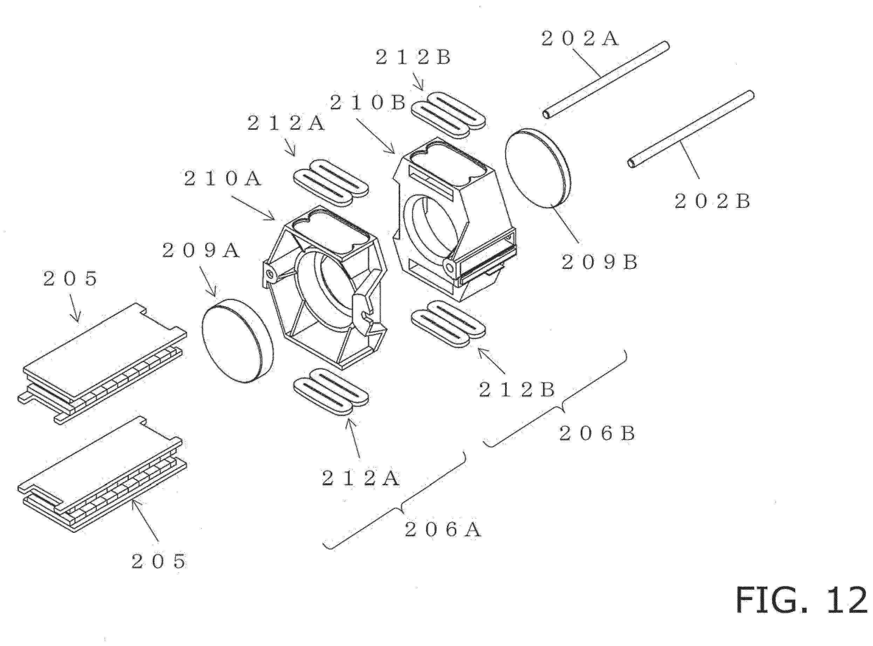

Fig. 12 is an exploded oblique view of the lens drive unit according to Embodiment 2.

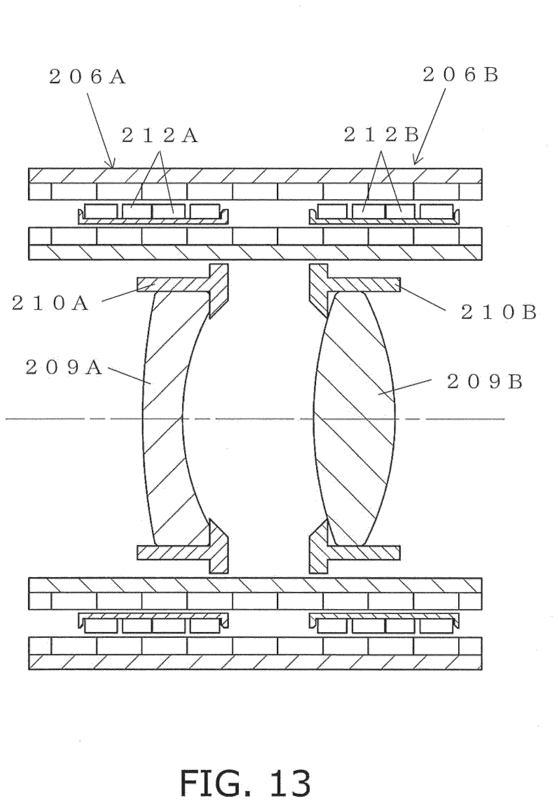

Fig. 13 is an oblique view of the lens drive unit according to Embodiment 2.

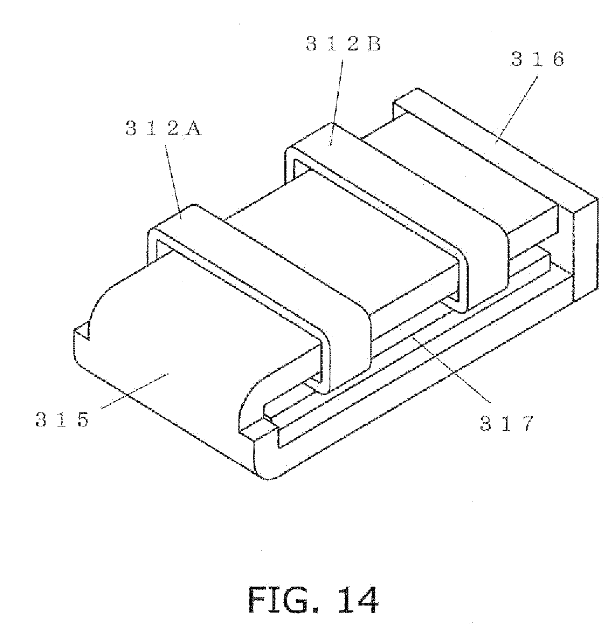

Fig. 14 is a diagram illustrating a case in which a plurality of coils are driven in a conventional voice coil motor, as a comparative example.

In Figs. 11 to 13, the lens drive unit of Embodiment 2 is the same as in the Embodiment 1 above in that two sets of coils are used for one field unit. However, Embodiment 2 differs in that two sets of coils 212A and 212B, each consisting of two coils, are fixed to separate lens frames, a first moving frame 210A and a second moving frame 210B, respectively, and are driven and controlled independently, as shown in Fig. 12.

The configuration of Embodiment 2 shown in Figs. 11 to 13 will now be described in detail.

In Fig. 12, the A group lens unit 206A comprises an A group lens 209A, an A group lens frame (first moving frame) 210A, and A group coils 212A.

The A group lens 209A is fixed to the lens frame 210A as shown in Fig. 13. The A group coils 212A are fixed to the outer peripheral surface of the lens frame 210A.

Similarly, the B group lens unit 206B comprises a B group lens 209B, a B group lens frame (second moving frame) 210B, and B group coils 212B.

The B group lens 209B is fixed to the lens frame 210B as shown in Fig. 13. The B group coils 212B are fixed to the outer peripheral surface of the lens frame 210B.

The main shaft 202A and the sub-shaft 203B are disposed along the direction of the optical axis L in a state of being inserted into the insertion holes of the group A lens unit 206A and the group B lens unit 206B, respectively. The main shaft 202A and the sub-shaft 203B guide the movement of the group A lens unit 206A and the group B lens unit 206B in the direction of the optical axis L.

As discussed above, with the lens barrel of this embodiment, two shafts (the main shaft 202A and the sub-shaft 203B) are shared by two lens units (the group A lens unit 206A and the group B lens unit 206B).

This simplifies the configuration compared to a configuration in which two lens units are guided by separate shafts, and also suppresses variance in the relative accuracy (eccentricity and tilt) between the A group lens 209A and the B group lens 209B due to shaft attachment error.

### (3) Comparison of Configuration of Embodiment 2 with Comparative Example (Conventional Voice Coil Motor)

Here, the merits of the configuration of this embodiment will be explained through comparison with a configuration in which two coils are provided for one field portion in a conventional voice coil motor.

Fig. 14 is a diagram illustrating a conventional voice coil motor in which two coils are used. In Fig. 14, the configuration is the same as that of the voice coil motor shown in Figs. 6A to 6C, except that two coils 312A and 312B are provided to a main yoke 315.

When two coils are used in the conventional voice coil motor shown in Fig. 14, if an attempt is made to ensure the movable range for each of the two coils 312A and 312B, the permanent magnet 317 and the main yoke 315 will inevitably become longer in the optical axis direction.

If the permanent magnet 317 and the main yoke 315 are lengthened in the optical axis direction, the main yoke 315 and the sub-yoke 316 will be prone to magnetic saturation. Therefore, if these components are simply lengthened in the optical axis direction, the full performance of the permanent magnet 317 cannot be realized, and the thrust will end up decreasing.

On the other hand, with the configuration of Embodiment 2 shown in Figs. 11 to 13, if the field unit 205 is lengthened in the optical axis direction, this increases the number of poles of the magnet, so an increase in length can be achieved without affecting magnetic saturation at all, and there is no drop in thrust.

Furthermore, when two coils are used in the conventional voice coil motor shown in Fig. 14, the two coils 312A and 312B are wound around the main yoke 315. Accordingly, just as with a transformer, when current is sent through the coil 312A, an induced voltage is generated in the coil 312B. Therefore, even if an attempt is made to separately control the currents flowing through the coils 312A and 312B, the currents are affected by the interaction between the coils 312A and 312B, making it difficult to control them accurately.

On the other hand, with the configuration of Embodiment 2 shown in Figs. 11 to 13, the coils 212A and 212B are each an air-core coil, and the coils 212A and 212B barely affect each other, so the currents flowing through each of the coils 212A and 212B can be easily controlled.

As described above, with the configuration of Embodiment 2, even if the field unit 205 is lengthened in the optical axis direction, this will not affect by magnetic saturation, so a decrease in the thrust of the coils 212A and 212B can be avoided. Also, when a plurality of sets of coils 212A and 212B are combined with one field unit 205, there is almost no interaction between the coils 212A and 212B, and this has the useful effect of making control easier.

In Embodiment 2 above, an example was given of a configuration in which two lens units (A group and B group lens units 206A and 206B) were combined with one field unit, but the configuration may instead be such that three or more lens units are combined.

Also, the lens unit to be driven is not limited to a focusing lens unit including a focusing lens, and may instead be a zoom lens unit, an image stabilization unit, an aperture unit, or some other moving frame.

### INDUSTRIAL APPLICABILITY

The lens drive unit of the present invention exhibits the effect that it can be more compact and can produce the necessary thrust to drive a lens to the end of the lens drive range, and therefore can be broadly applied as an actuator for driving a lens.

### REFERENCE SIGNS LIST

1 camera body
10 lens drive unit
100 lens barrel
101 exterior unit
102 first lens group unit
103 second lens group unit
104 aperture unit
105 third lens group unit
106 fourth lens group unit
107 board unit
108 lens mount unit
201 fixed frame
202, 202A spindle
203, 203B sub-shaft
204 flexible printed circuit board
205 field unit (first and second field portions)
205A field unit (first field portion)
205B field unit (third field portion)
205C field unit (second field portion)
206, 206A, 206B focusing lens unit
207 holding frame
208 MR sensor
209 focusing lens
209A A group lens
209B B group lens
210 focusing lens frame (first moving frame)
210A A group lens frame (first moving frame)
210B B group lens frame (second moving frame)
211 MR magnet
212, 212a, 212b coil
212A A group coil
212B B group coil
213 screw
215 main yoke
216 sub-yoke
217 main magnet
218 sub-magnet
C1 optical axis center
G1 moving part center of gravity
L optical axis
P1 plane

## Claims

1. A lens drive unit, comprising:
n-phase coils (n is an integer of 2 or more) that are fixed to a first moving frame that is configured to move back and forth in an optical axis direction and hold a lens, have a winding axis in a direction substantially perpendicular to the optical axis of the lens, and are disposed side by side along the optical axis direction;
a first field portion that has N poles and S poles alternately disposed along the optical axis direction, and is disposed at a position opposite both sides of the n-phase coils in a radial direction so as to sandwich the n-phase coils in the radial direction centered on the optical axis,
wherein the coils are disposed in two or more sets side by side in the optical axis direction, each set including an n-phase coil with respect to one of the first field portions.

2. The lens drive unit according to claim 1,
wherein the n-phase coils have a winding axis in a direction substantially perpendicular to the optical axis of the lens.

3. The lens drive unit according to claim 1,
wherein the first field portion is disposed at a position opposite both sides of the n-phase coils in the radial direction so as to sandwich the n-phase coils in the radial direction centered on the optical axis.

4. The lens drive unit according to claim 1,
wherein the n-phase coils are two-phase coils.

5. The lens drive unit according to claim 1,
further comprising a second field portion disposed so as to surround the optical axis along with the first field portion.

6. The lens drive unit according to claim 5,
further comprising a main shaft configured to support the first moving frame in a state of being able to move back and forth in the optical axis direction,
wherein the first field portion and the second field portion are disposed on either side of a plane so as to sandwich the plane passing through the main shaft and a center of gravity of the first moving frame holding the lens.

7. The lens drive unit according to claim 5 or 6,
further comprising a third field portion that is disposed to surround the optical axis together with the first field portion and the second field portion.

8. The lens drive unit according to claim 1,
further comprising a second moving frame configured to hold a lens,
wherein the n-phase coils with respect to one of the first field portions are fixed to the second moving frame, and
the first moving frame and the second moving frame are driven separately.

9. A lens barrel comprising:
the lens drive unit according to any of claims 1 to 8; and
a first moving frame configured to hold the lens, has the n-phase coils fixed thereto, and is driven back and forth in the optical axis direction by the lens drive unit.

## Amended claims

### Amended claims under Art. 19.1 PCT

1. (Amended). A lens drive unit, comprising:
n-phase coils (n is an integer of 2 or more) that are fixed to a first moving frame that is configured to move back and forth in an optical axis direction and hold a lens, and are disposed side by side along the optical axis direction;
a first field portion that has N poles and S poles alternately disposed along the optical axis direction,
wherein the coils are disposed in two or more sets side by side in the optical axis direction, each set including an n-phase coil with respect to one of the first field portions.

2. The lens drive unit according to claim 1,
wherein the n-phase coils have a winding axis in a direction substantially perpendicular to the optical axis of the lens.

3. The lens drive unit according to claim 1,
wherein the first field portion is disposed at a position opposite both sides of the n-phase coils in the radial direction so as to sandwich the n-phase coils in the radial direction centered on the optical axis.

4. The lens drive unit according to claim 1,
wherein the n-phase coils are two-phase coils.

5. The lens drive unit according to claim 1,
further comprising a second field portion disposed so as to surround the optical axis along with the first field portion.

6. The lens drive unit according to claim 5,
further comprising a main shaft configured to support the first moving frame in a state of being able to move back and forth in the optical axis direction,
wherein the first field portion and the second field portion are disposed on either side of a plane so as to sandwich the plane passing through the main shaft and a center of gravity of the first moving frame holding the lens.

7. The lens drive unit according to claim 5 or 6,
further comprising a third field portion that is disposed to surround the optical axis together with the first field portion and the second field portion.

8. The lens drive unit according to claim 1,
further comprising a second moving frame configured to hold a lens,
wherein the n-phase coils with respect to one of the first field portions are fixed to the second moving frame, and
the first moving frame and the second moving frame are driven separately.

9. A lens barrel comprising:
the lens drive unit according to any of claims 1 to 8; and
a first moving frame configured to hold the lens, has the n-phase coils fixed thereto, and is driven back and forth in the optical axis direction by the lens drive unit.
